# EUROPEAN PATENT APPLICATION

(11) **EP 4 510 629 A1**
(43) Date of publication of application: **19.02.2025**
(21) Application number: 23788198.2
(22) Date of filing: 03.04.2023
(51) Int. Cl.: H04S 7/00

(54) **ACOUSTIC SIGNAL PROCESSING METHOD, PROGRAM, ACOUSTIC SIGNAL PROCESSING DEVICE, AND ACOUSTIC SIGNAL PROCESSING SYSTEM**

(30) Priority: 14.04.2022 US 202263330907 P; 02.02.2023 JP 2023014485
(71) Applicant: Panasonic Intellectual Property Corporation of America, Torrance, CA 90504 (US)
(72) Inventor: ENOMOTO, Seigo, Kadoma-shi, Osaka 571-0057 (JP); USAMI, Hikaru, Kadoma-shi, Osaka 571-0057 (JP); NAKAHASHI, Kota, Kadoma-shi, Osaka 571-0057 (JP); EHARA, Hiroyuki, Kadoma-shi, Osaka 571-0057 (JP); YAMADA, Mariko, Kadoma-shi, Osaka 571-0057 (JP); ISHIKAWA, Tomokazu, Kadoma-shi, Osaka 571-0057 (JP); MIZUNO, Ko, Kadoma-shi, Osaka 571-0057 (JP)
(74) Representative: Novagraaf International SA
(86) International application number: PCT/JP2023/013817
(87) International publication number: WO 2023/199778

(57) **Abstract**

A sound signal processing method includes: obtaining a sound signal (S10); determining, for each of a plurality of sound processes executed in a pipeline, whether to execute the sound process on the sound signal, based on priority information indicating a priority associated with the sound signal (S20); and executing each sound process determined to be executed in the determining, on the sound signal (S30).

## Description

### [Technical Field]

The present disclosure relates to a sound signal processing method, a program, a sound signal processing device, and a sound signal reproduction system.

### [Background Art]

There is conventionally a device that executes predetermined sound processing on a sound signal and generates sound (sound wave) based on the sound signal on which the sound processing has been executed to provide the sound to a user. Patent Literature (PTL) 1 discloses a device that executes a plurality of sound processes on a sound signal in a pipeline (pipeline processing).

### [Citation List]

### [Patent Literature]

[PTL 1] International Patent Application Publication No. 2021/180938

### [Summary of Invention]

### [Technical Problem]

The present disclosure provides a sound signal processing method, etc. that can appropriately execute a plurality of sound processes executed in a pipeline on a sound signal. In particular, the present disclosure provides a sound signal processing method, etc. that can appropriately execute pipeline processing even with a device having limited computing power, such as a smartphone or a head-mounted display, while preventing degradation in sound quality or sound effect from being perceived.

### [Solution to Problem]

A sound signal processing method according to an aspect of the present disclosure is a sound signal processing method executed by a sound signal processing device, including: obtaining a sound signal; determining, for each of a plurality of sound processes executed in a pipeline, whether to execute the sound process on the sound signal, based on priority information indicating a priority associated with the sound signal; and executing each sound process determined to be executed in the determining, on the sound signal.

A program according to an aspect of the present disclosure is a program for causing a computer to execute the foregoing sound signal processing method.

A sound signal processing device according to an aspect of the present disclosure includes: an obtainer that obtains a sound signal; a determiner that determines, for each of a plurality of sound processes executed in a pipeline, whether to execute the sound process on the sound signal, based on priority information indicating a priority associated with the sound signal; and a sound processor that executes each sound process determined to be executed by the determiner, on the sound signal.

A sound signal reproduction system according to an aspect of the present disclosure includes: the foregoing sound signal processing device; and a driver that generates a sound based on the sound signal on which each sound process determined to be executed by the determiner has been executed.

### [Advantageous Effects of Invention]

According to the present disclosure, it is possible to provide a sound signal processing method, etc. that can appropriately execute a plurality of sound processes executed in a pipeline on a sound signal.

### [Brief Description of Drawings]

[FIG. 1]

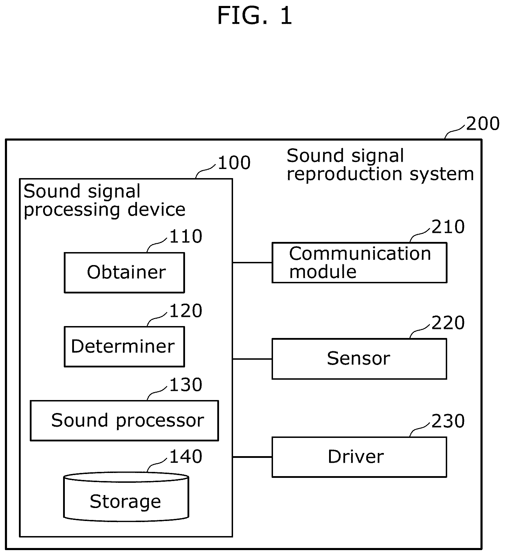

   FIG. 1 is a block diagram illustrating the functional structure of a sound signal reproduction system according to an embodiment.
[FIG. 2]

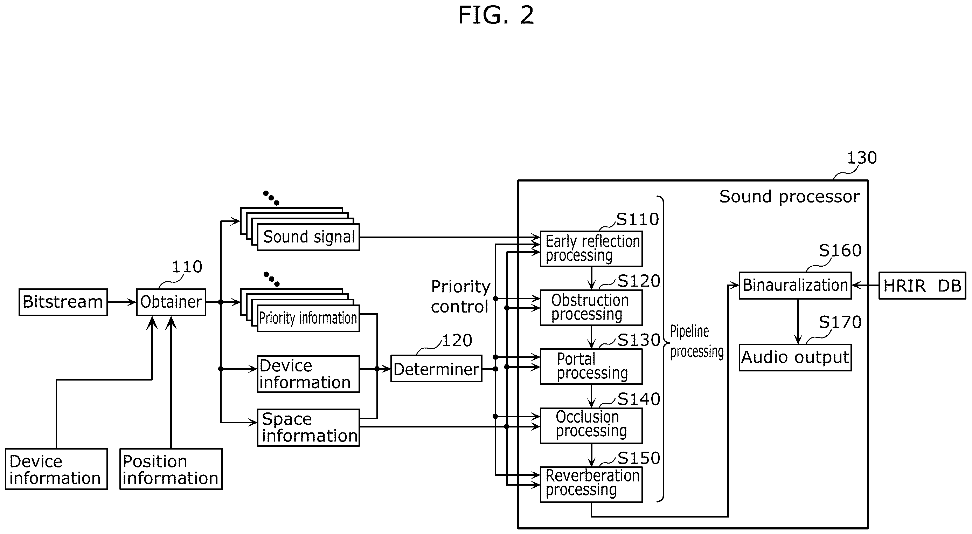

   FIG. 2 is a diagram for explaining a plurality of sound processes executed in a pipeline by a sound signal processing device according to the embodiment.
[FIG. 3]

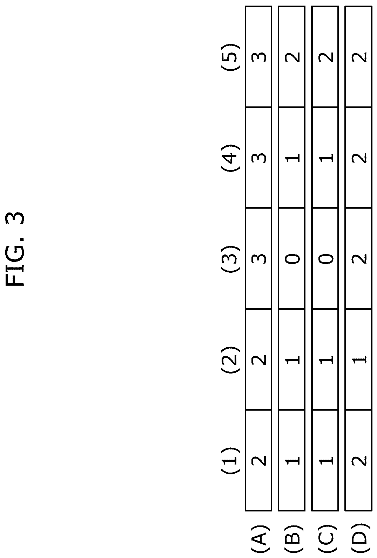

   FIG. 3 is a diagram illustrating priority information according to the embodiment.
[FIG. 4]

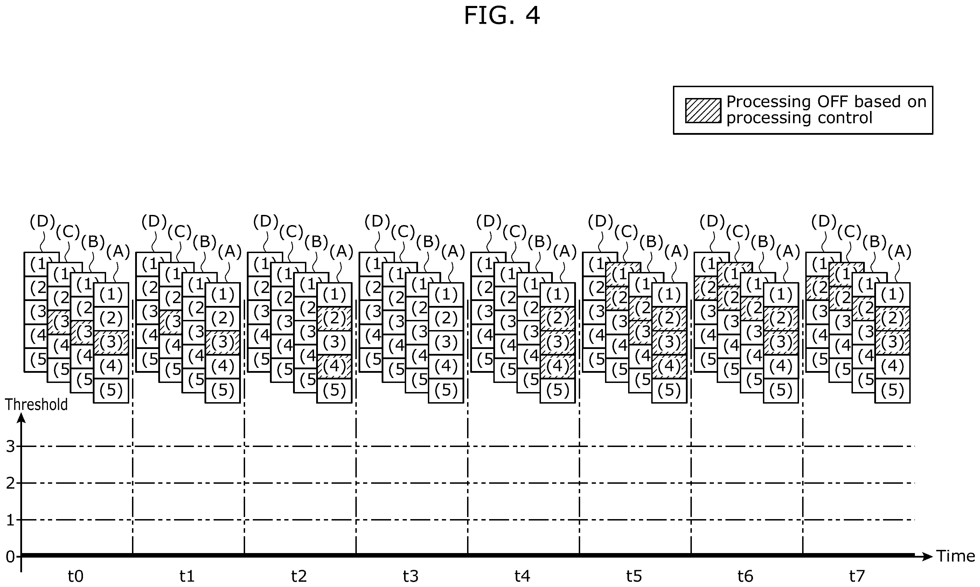

   FIG. 4 is a diagram illustrating a first example of the plurality of sound processes executed in a pipeline by the sound signal processing device according to the embodiment.
[FIG. 5]

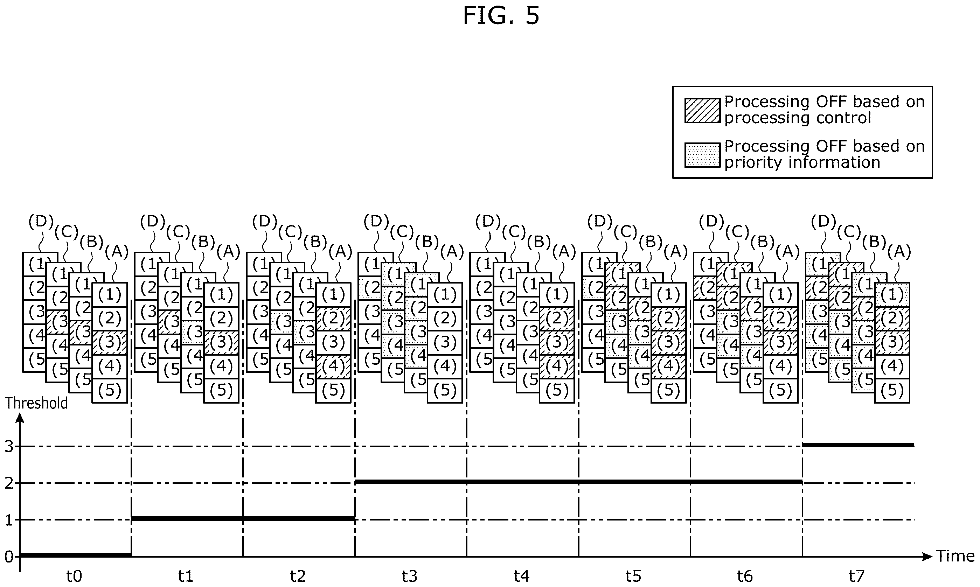

   FIG. 5 is a diagram illustrating a second example of the plurality of sound processes executed in a pipeline by the sound signal processing device according to the embodiment.
[FIG. 6]

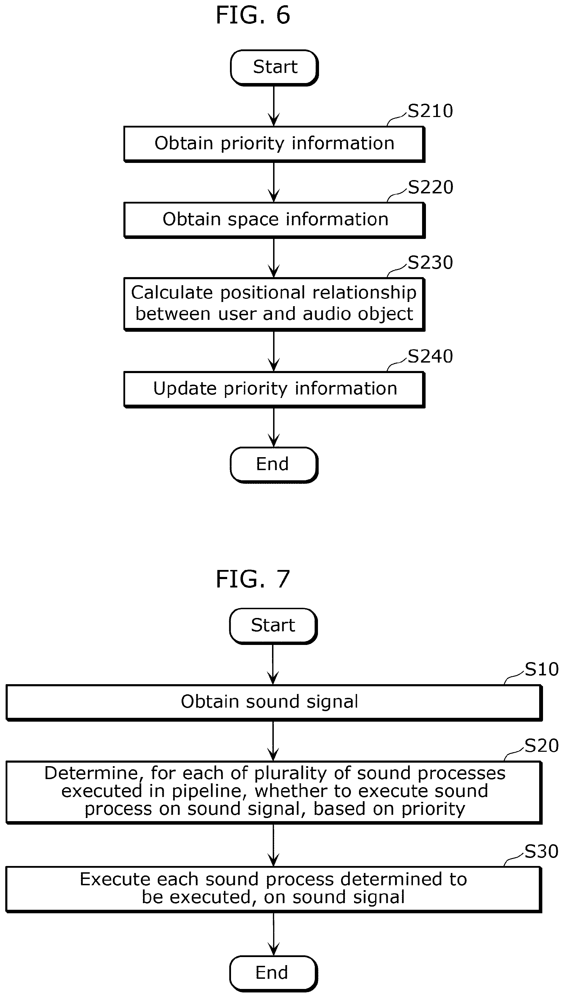

   FIG. 6 is a flowchart illustrating a priority update process by the sound signal processing device according to the embodiment.
[FIG. 7]
   FIG. 7 is a flowchart illustrating processing by the sound signal processing device according to the embodiment.

### [Description of Embodiments]

### (Underlying Knowledge Forming Basis of the Present Disclosure)

In recent years, technological developments related to virtual experiences from a user's perspective, such as virtual reality (VR) or augmented reality (AR), have been promoted. In VR or AR, the user can experience as if he or she is in a virtual space (i.e. the user can be immersed in the virtual space). In particular, since immersiveness is enhanced by combining a stereoscopic visual experience with a stereoscopic auditory experience, technologies related to stereoscopic auditory experiences are also considered important in VR or AR. A sound signal representing sound is subjected to sound processing (signal processing on the sound signal) in order to realize a stereoscopic auditory experience, that is, reproduce stereophonic sound. Here, a plurality of sound processes may be executed on the sound signal in a pipeline. In other words, a plurality of sound processes may be executed on the sound signal one by one in sequence.

Conventional devices that execute a plurality of sound processes on a sound signal in a pipeline have a problem in that the sound processes executed on the sound signal are not changed depending on, for example, the type or load state of the device used by the user. Thus, there is conventionally a problem in that a plurality of sound processes executed in a pipeline cannot be appropriately executed on a sound signal depending on the situation, such as unwanted execution of a sound process that is better not to be executed in some cases.

In view of the problem stated above, the inventors of the present application have discovered the presently disclosed technology .

An embodiment will be described in detail below, with reference to the drawings.

The embodiment described below shows a general or specific example. The numerical values, shapes, materials, structural elements, the arrangement and connection of the structural elements, steps, the processing order of the steps etc. shown in the following embodiment are mere examples, and do not limit the scope of the present disclosure. Of the structural elements in the embodiment described below, the structural elements not recited in any one of the independent claims in the present disclosure are described as optional structural elements. Each drawing does not necessarily provide precise depiction. The substantially same structural elements are given the same reference signs throughout the drawings, and repeated description may be omitted or simplified.

### [Embodiment]

### [Structure]

First, the structure of a sound signal reproduction system according to an embodiment will be described.

FIG. 1 is a block diagram illustrating the functional structure of sound signal reproduction system 200 according to an embodiment.

Sound signal reproduction system 200 is a system that performs sound processing on a sound signal and generates sound based on the sound signal on which the sound processing has been performed. Specifically, sound signal reproduction system 200 is a system that reproduces stereophonic sound by executing a plurality of sound processes on a sound signal in a pipeline. For example, sound signal reproduction system 200 is used simultaneously with a display device that displays images for a visual VR or AR experience and a device for stereoscopic video reproduction (neither of which is illustrated).

Sound signal reproduction system 200 is implemented, for example, by a computer such as a personal computer or a smartphone and a head-mounted display (HMD) (not illustrated) worn by a user. In sound signal reproduction system 200 having a function as a renderer that generates a sound signal provided with sound effects, a server may assume all or part of the functions of the renderer. In detail, all or part of obtainer 110, determiner 120, sound processor 130, and storage 140 may be present in a server (not illustrated). In this case, sound signal reproduction system 200 is implemented, for example, by a combination of a computer such as a personal computer or a smartphone, an HMD (not illustrated) worn by a user, and a server (not illustrated). The computer, the HMD, and the server may be connected to each other communicably via the same network, or may be connected to each other via different networks. If the computer, the HMD, and the server are connected to each other via different networks, there is a high possibility of communication delays. Accordingly, processing by the server may be allowed only when the computer, the HMD, and the server are connected to each other communicably via the same network. Whether the server assumes all or part of the functions of the renderer may be determined depending on the amount of data of the bitstream received by sound signal reproduction system 200.

For example, sound signal reproduction system 200 changes the sound to be presented in response to the movement of the user's head, to cause the user to perceive as if he or she is moving the head within a three-dimensional sound field. Thus, sound signal reproduction system 200 moves the three-dimensional sound field in the opposite direction to the movement of the user.

As illustrated in FIG. 1, sound signal reproduction system 200 includes sound signal processing device 100, communication module 210, sensor 220, and driver 230.

Sound signal processing device 100 is a computing unit for executing various types of signal processing in sound signal reproduction system 200. Sound signal processing device 100 includes a processor such as a central processing unit (CPU) or a digital signal processor (DSP) and memory, and achieves various functions by the processor executing programs stored in the memory. The functional structure of sound signal processing device 100 will be described later.

Sound signal processing device 100 is communicably connected to communication module 210, sensor 220, and driver 230.

Communication module 210 is an interface device for receiving a bitstream to sound signal reproduction system 200. For example, communication module 210 includes an antenna and a signal converter, and receives a bitstream from an external device such as a server via wireless communication. Specifically, communication module 210 receives a wireless signal such as a bitstream including various information such as a sound signal converted into a format for wireless communication using the antenna, and reconverts the wireless signal into the information such as the sound signal using the signal converter. In this way, sound signal processing device 100 (more specifically, obtainer 110) obtains the information such as the sound signal from the external device via wireless communication.

Communication between sound signal reproduction system 200 and the external device may be wired communication. The input data may be stored in a storage device such as storage 140.

Sensor 220 is a device for detecting the position of the user. Specifically, sensor 220 detects 6DoF (position (x, y, z) and angle (yaw, pitch, roll)) as the position of the user. Sensor 220 is a combination of various sensors used for detecting movement, such as a gyro sensor and an acceleration sensor. For example, when sound signal reproduction system 200 is implemented by a smartphone, sensor 220 is included in the smartphone.

Sensor 220 may be included in an external device such as an HMD that operates in response to the movement of the user's head. As sensor 220, an external imaging device or the like may be used to capture an image of the movement of the user's head, and the captured image may be processed to detect the movement of the user's head.

Sensor 220 moves with the user, and detects the speed and amount of the movement of the user. For example, when sensor 220 is included in the HMD, sensor 220 detects the speed and amount of the movement of the user's head.

As the speed of the movement of the user's head, sensor 220 may detect, for example, the angular speed of rotation about at least one of three mutually orthogonal axes in the sound space as the axis of rotation or the acceleration of displacement in at least one of the three axes as the direction of displacement.

As the amount of the movement of the user's head, sensor 220 may detect, for example, the amount of rotation about at least one of three mutually orthogonal axes in the sound space as the axis of rotation or the amount of displacement in at least one of the three axes as the direction of displacement.

Sensor 220 may be implemented by any device, such as a camera or a Global Positioning System (GPS) receiver, as long as it can detect the position of the user.

Sensor 220 may include a thermometer such as a thermocouple that detects the temperature of sound signal processing device 100, a sensor that detects the remaining level of a battery connected to sound signal processing device 100, and the like. Obtainer 110 may obtain information indicating the temperature of sound signal processing device 100 and information indicating the remaining level of the battery from sensor 220.

Driver 230 is a device that generates sound (sound wave) based on a sound signal. Specifically, driver 230 generates sound based on a sound signal on which each sound process determined to be executed by determiner 120 (described later) has been executed. Driver 230 is implemented, for example, by earphones or headphones.

Next, the structure of sound signal processing device 100 will be described.

Sound signal processing device 100 includes obtainer 110, determiner 120, and sound processor 130.

Obtainer 110 is a processing unit that obtains a sound signal and various information such as priority information. For example, obtainer 110 is capable of communicating with communication module 210, and obtains a bitstream including a sound signal and the like from an external device via communication module 210.

The bitstream includes, for example, a sound signal, priority information, and audio object information.

Driver 230 generates sound based on the sound signal on which sound processing has been executed by sound signal processing device 100.

The priority information is information indicating the priority of each of the plurality of sound processes executed in a pipeline by sound processor 130, in association with the sound signal. For example, when obtainer 110 obtains a plurality of sound signals, the priority information includes information indicating a plurality of priorities for each of the plurality of sound signals. The priority is expressed, for example, as a numerical value. For example, the priority information indicates the priorities of the plurality of sound processes individually for each of the plurality of sound signals.

The sound signal may be single-channel or multi-channel such as stereo. In detail, the bitstream may include two or more sound signals each having single-channel sound information, or include one or more multi-channel sound signals having multi-channel sound information.

The audio object information is information about an object (audio object) that generates sound based on the sound signal, i.e. reproduces the sound signal. The audio object information includes, for example, information indicating the position of the audio object located in the sound space, information about the orientation of the audio object, information about the directivity of the sound emitted by the audio object, information indicating whether the audio object belongs to an animate thing, and information indicating whether the audio object is a mobile body. For example, the sound signal corresponds to one or more audio objects indicated by the audio object information.

Obtainer 110 also obtains position information indicating the position of the user from sensor 220. As a result of obtaining the audio object information included in the bitstream and the position information from sensor 220, obtainer 110 obtains space information including the audio object information and the position information.

For example, in sound signal processing device 100, the sound signal is converted so that the sound emitted by the audio object can be perceived as the sound reaching the listening point (specifically, the position of the user in the sound space) from the audio object.

The position and direction of the listening point may be changed according to the movement of the user's head, for example.

Although the audio object information has been described as information about an object that generates a sound signal, the bitstream may include information about not only a sound source object such as an audio object but also a non-sound source object that does not generate a sound signal. The priority information, the audio object information, and the non-sound source object information may be referred to as meta-information, as information used to control sound processing on a sound signal in sound signal reproduction system 200.

The meta-information may be information used to describe a scene expressed in the sound space. Herein, the term "scene" refers to a collection of all elements that represent three-dimensional video and audio events in the sound space, which are modeled in sound signal reproduction system 200 using the meta-information. In other words, the meta-information herein may include not only information for controlling sound processing but also information for controlling video processing. The meta-information may include information for controlling only one of sound processing and video processing, or include information used for controlling both sound processing and video processing.

Sound signal reproduction system 200 generates virtual sound effects by performing sound processing on the sound information (sound signal) using the meta-information included in the bitstream and interactive user position information obtained additionally. Although this embodiment describes the case where early reflection processing, obstruction processing, portal processing, occlusion processing, and reverberation processing are performed as sound effects, other sound processing may be performed using the meta-information. Examples of other sound effects that can be added include distance decay effect, localization, and Doppler effect. Information for switching all or part of the sound effects on and off and priority information of these sound effects may be added to the bitstream as meta-information.

All or part of meta-information may be obtained from other than the bitstream of the sound information. For example, either the meta-information for controlling sound processing or the meta-information for controlling video processing may be obtained from other than the bitstream, or both of these meta-information may be obtained from other than the bitstream. When the meta-information for controlling video processing is included in the bitstream obtained by sound signal reproduction system 200, sound signal reproduction system 200 may have a function of outputting meta-information that can be used for video control to the display device that displays images or the stereoscopic video reproduction device that reproduces stereoscopic video.

As an example, encoded meta-information includes information about a sound space including an audio object and an obstruction object and information about a localization position when the sound image of the sound is localized at a predetermined position in the sound space (i.e. the sound is perceived as reaching from a predetermined direction). The obstruction object is an object that can affect the sound perceived by the user, for example, by blocking or reflecting the sound emitted by the audio object until the sound reaches the user. Obstruction objects can include not only stationary objects but also animals such as humans or mobile bodies such as machines. When a plurality of audio objects are present in the sound space, an audio object other than any audio object can be an obstruction object for the audio object. Non-sound source objects such as building materials and inanimate things and sound source objects that emit sound can also be obstruction objects.

The meta-information includes all or part of information indicating the shape of the sound space, the shape and position of each obstruction object present in the sound space, the shape and position of each audio object present in the sound space, and the position and orientation of the user in the sound space.

The sound space may be either a closed space or an open space. The meta-information includes information indicating the reflectance of each structure that can reflect sound in the sound space, such as floors, walls, and ceilings, and the reflectance of each obstruction object present in the sound space. Herein, the reflectance is the ratio of energy of reflected sound to incident sound, and is set for each frequency band of the sound. The reflectance may be set uniformly regardless of the frequency band of the sound. When the sound space is an open space, for example, parameters such as a uniformly set attenuation factor, diffracted sound, and early reflected sound may be used as meta-information.

Although reflectance has been described as a parameter related to obstruction objects and audio objects included in the meta-information above, the meta-information may include information other than reflectance. For example, the meta-information may include information about the material of the object as information related to both sound source objects and non-sound source objects. Specifically, the meta-information may include parameters such as diffusivity, transmittance, and sound absorption rate.

The meta-information may include information about each sound source object, such as volume, radiation characteristics (directivity), reproduction conditions, the number and type of sound sources emitted from one object, and information designating the sound source region in the object. The reproduction conditions may include, for example, whether the sound is sound reproduced continuously or sound triggered by an event. The sound source region in the object may be determined based on the relative relationship between the position of the user and the position of the object, or determined with respect to the object. When the sound source region in the object is determined based on the relative relationship between the position of the user and the position of the object, with respect to the plane along which the user is looking at the object, the user can be made to perceive that sound A is emitted from the right side of the object and sound B is emitted from the left side of the object as seen from the user. When the sound source region in the object is determined with respect to the object, which sound is emitted from which region of the object can be fixed regardless of the direction in which the user is looking. For example, the user can be made to perceive that high-pitched sound comes from the right side and low-pitched sound comes from the left side when looking at the object from the front. In this case, if the user goes around to the back of the object, the user can be made to perceive that low-pitched sound comes from the right side and high-pitched sound comes from the left side when looking at the object from the back.

The meta-information related to the space may include the time until early reflected sound, the reverberation time, and the ratio of direct sound to diffuse sound. When the ratio of direct sound to diffuse sound is zero, the user can be made to perceive only direct sound.

The sound information and the meta-information may be stored in one bitstream or may be stored separately in a plurality of bitstreams. Likewise, the sound information and the meta-information may be stored in one file or may be stored separately in a plurality of files.

When the sound information and the meta-information are stored separately in a plurality of bitstreams or a plurality of files, information indicating another bitstream or file relevant to one or some of the bitstreams or files may be included in the meta-information, or information indicating another bitstream or file relevant to each of the bitstreams or files may be included in the meta-information. Herein, the "relevant bitstream or file" is, for example, a bitstream or file that may be used simultaneously during sound processing. A bitstream or file that collectively describes information indicating such other relevant bitstreams and files may be included in the information received by sound signal processing device 100. Examples of the information indicating other relevant bitstreams or files are identifiers indicating the other bitstreams and filenames, URLs (Uniform Resource Locator), or URIs (Uniform Resource Identifier) indicating the other files. In this case, based on the information indicating the other relevant bitstream or file, obtainer 110 identifies or obtains the bitstream or file. The bitstream may include not only information indicating another bitstream relevant to the bitstream but also information indicating a bitstream or file relevant to another bitstream or file. Here, the file including information indicating the relevant bitstream or file may be, for example, a control file such as a manifest file used for content distribution.

For example, obtainer 110 obtains device information about the state of sound signal processing device 100. The device information includes, for example, at least one of information indicating the remaining level of the battery for driving sound signal processing device 100, information indicating the amount of heat generation of sound signal processing device 100, or information indicating the processing capacity of sound signal processing device 100. Obtainer 110 obtains the device information from, for example, sensor 220, storage 140, or an external device such as a server.

Determiner 120 is a processing unit that determines, for each of the plurality of sound processes executed in a pipeline, whether to execute the sound process on the sound signal, based on the priority information indicating the priority associated with the sound signal. For example, the priority information indicates the priority of each of the plurality of sound processes. Determiner 120 determines, for each of the plurality of sound processes, whether to execute the sound process on the sound signal, based on whether the priority of the sound process is greater than or equal to a threshold. The threshold is expressed by a numerical value, for example. For example, determiner 120 determines, for each of the plurality of sound processes, whether the priority of the sound process is greater than or equal to the threshold, by comparing the respective numerical values of the priority and the threshold.

The threshold is not limited and any threshold may be set. Information indicating the threshold is stored in storage 140, for example.

The information indicating the threshold may be included in the bitstream together with the sound signal and the like, or may be obtained from an external device such as a server.

Determiner 120 may calculate the threshold based on a predetermined condition. For example, determiner 120 determines the threshold based on the device information about the state of sound signal processing device 100.

Sound processor 130 is a processing unit that executes predetermined sound processing on the sound signal. Specifically, sound processor 130 executes each sound process determined to be executed by determiner 120, on the sound signal. More specifically, sound processor 130 performs processing based on the sound signal and space information obtained by obtainer 110 so that the sound that is based on the sound signal and is emitted by the audio object indicated by the space information will be generated from a predetermined position in a predetermined direction with predetermined directivity in the sound space. For example, sound processor 130 executes a process of converting the obtained digital sound signal into an analog signal and outputs the converted sound signal. For example, as a result of the sound signal being output from sound processor 130 to driver 230, the sound based on the sound signal is generated from driver 230.

Each processing unit such as obtainer 110, determiner 120, and sound processor 130 is implemented, for example, by a processor and memory storing control programs executed by the processor.

Storage 140 is a storage device that stores various information such as the threshold. Storage 140 also stores an HRIR database (HRIR DB) that indicates Head-Related Impulse Response (HRIR).

HRIR is the response characteristic when one impulse is generated. Specifically, HRIR is the response characteristic that is converted from an expression in the frequency domain to an expression in the time domain by Fourier transforming the head-related transfer function, which represents the change in sound caused by surrounding objects including the auricle, the head, and the shoulders as a transfer function. The HRIR DB is a database including such information.

Storage 140 is implemented, for example, by a hard disk drive (HDD) or flash memory.

### [Procedure]

Next, the procedure by sound signal processing device 100 will be described.

FIG. 2 is a diagram for explaining a plurality of sound processes executed in a pipeline by sound signal processing device 100 according to the embodiment.

First, obtainer 110 obtains a bitstream including a plurality of sound signals, priority information associated with each of the sound signals, and audio object information from an external device such as a server via communication module 210. Obtainer 110 also obtains position information indicating the position of the user from, for example, sensor 220. Obtainer 110 also obtains device information from, for example, storage 140.

Determiner 120 determines, for each of the plurality of sound processes executed in a pipeline by sound processor 130, whether to execute the sound process, based on the priority information obtained by obtainer 110.

For example, sound processor 130 executes early reflection processing (S110), obstruction processing (S120), portal processing (S130), occlusion processing (S140), and reverberation processing (S150) on the sound signal in a pipeline. Specifically, sound processor 130 executes early reflection processing, obstruction processing, portal processing, occlusion processing, and reverberation processing on the sound signal in this order. Early reflection processing, obstruction processing, portal processing, occlusion processing, and reverberation processing are examples of sound processes executed on the sound signal.

Examples of types of sound propagation include early reflection (reflection), obstruction, portal (portaling), occlusion, and reverberation. In sound processing, processes corresponding to these types of sound propagation are executed on the sound signal.

For example, early reflection processing is executed for sound reflected by walls, etc.

For example, obstruction processing is executed for sound diffracted around obstruction.

For example, portal processing is executed for sound diffracted from doors, etc. among sound that passes through walls.

For example, occlusion processing is executed for sound that propagates through walls.

For example, reverberation processing is executed for sound that reverberates in a room.

FIG. 3 is a diagram illustrating priority information according to this embodiment. In FIG. 3, (A) to (D) indicate different sound signals, (1) to (5) indicate different sound processes, and the numerical values in the rectangular boxes each indicate priority. For example, (1) indicates early reflection processing, (2) indicates obstruction processing, (3) indicates portal processing, (4) indicates occlusion processing, and (5) indicates reverberation processing. In this example, priority is set such that a larger numerical value is given to a sound process to be executed with higher priority, for example, 0 corresponding to low priority and 3 corresponding to high priority (e.g. essential process).

For example, suppose obtainer 110 has obtained sound signals (A) to (D). In the example illustrated in FIG. 3, the priority information indicates that, for sound signal (A), the priority of early reflection processing is 2, the priority of obstruction processing is 2, the priority of portal processing is 3, the priority of occlusion processing is 3, and the priority of reverberation processing is 3. The priority information indicates that, for sound signal (B), the priority of early reflection processing is 1, the priority of obstruction processing is 1, the priority of portal processing is 0, the priority of occlusion processing is 1, and the priority of reverberation processing is 2.

The priority information is determined based on the following. For example, early reflection processing represented by sound process (1) is given high priority for a sound signal containing attack sound that takes a short time from its start to reaching its maximum volume. Obstruction processing and occlusion processing represented respectively by sound processes (2) and (4) are given high priority for a sound signal whose main part of energy is in a low frequency band. The priority of sound processing also depends on video information presented at the same time as the sound signal. For example, if the video information shows a stone-built street with a church, the priority of reverberation processing for the sound of the church bells is high.

The priority information may be assigned to sound signals (A) to (D) in advance. Alternatively, the priority information may be calculated by analyzing sound signals (A) to (D) when the method, device, or system using the presently disclosed technology is started.

Thus, the priority information indicates the priority of each of the plurality of sound processes (1) to (5) for each of sound signals (A) to (D). For example, based on the priority information, determiner 120 determines, for each of the plurality of sound processes (1) to (5), whether to execute the sound process, for each of sound signals (A) to (D).

FIG. 4 is a diagram illustrating a first example of a plurality of sound processes executed in a pipeline by sound signal processing device 100 according to the embodiment. In the example illustrated in FIG. 4, sound signals (A) to (D) are repeatedly obtained by obtainer 110. The priority associated with each of sound signals (A) to (D) is the priority indicated by the priority information illustrated in FIG. 3. In FIG. 4, among sound processes (1) to (5) for each of sound signals (A) to (D), each non-hatched process is a sound process executed on the sound signal and a hatched process is a sound process not executed on the sound signal.

Sound processor 130 determines whether to execute sound processing on the sound signal, for example, based on the sound signal and space information. For example, some sound processing is unnecessary depending on the type of the sound signal or the positional relationship between the user and driver 230. Hence, sound processor 130 determines whether to execute sound processes (1) to (5) on each of sound signals (A) to (D) based on, for example, the sound signal and space information. Depending on the determination result, sound processor 130 may not execute part or all of sound processes (1) to (5) on sound signals (A) to (D) (processing OFF based on processing control).

In the example illustrated in FIG. 4, for sound signals (A) to (D) obtained by obtainer 110 at time t0, sound process (3) is not executed on sound signals (A) to (C) and is executed on sound signal (D), and the other sound processes are executed on sound signals (A) to (D). For example, for sound signals (A) to (D) obtained by obtainer 110 at time t1, sound process (3) is not executed on sound signals (A) and (C) and is executed on sound signals (B) and (D), and the other sound processes are executed on sound signals (A) to (D).

Moreover, sound processor 130 executes or does not execute each of the plurality of sound processes on the sound signal depending on the determination result of determiner 120 based on the priority information.

For example, determiner 120 instructs sound processor 130 to execute each sound process whose priority is greater than or equal to a threshold, and instructs sound processor 130 not to execute each sound process whose priority is less than the threshold (priority control illustrated in FIG. 2). That is, the number of sound processes not executed is larger when the threshold is higher. In other words, the processing amount (computational amount) is less when the threshold is higher. In the example illustrated in FIG. 4, the threshold is 0 at each of time t0 to time t7, so that there is no sound process that is not executed based on the priority.

FIG. 5 is a diagram illustrating a second example of a plurality of sound processes executed in a pipeline by sound signal processing device 100 according to the embodiment. In the example illustrated in FIG. 5, sound signals (A) to (D) are repeatedly obtained by obtainer 110. The priority associated with each of sound signals (A) to (D) is the priority indicated by the priority information illustrated in FIG. 3. In FIG. 5, among sound processes (1) to (5) for each of sound signals (A) to (D), each non-hatched process is a sound process executed on the sound signal and a hatched (diagonal-hatched or dot-hatched) process is a sound process not executed on the sound signal.

In the example illustrated in FIG. 5 as in the example illustrated in FIG. 4, sound processor 130 determines whether to execute sound processes (1) to (5) on each of sound signals (A) to (D) based on, for example, the sound signal and space information. Depending on the determination result, sound processor 130 may not execute part or all of sound processes (1) to (5) on sound signals (A) to (D) (processing OFF based on processing control indicated by diagonal hatching in FIG. 5).

In the example illustrated in FIG. 5, the threshold gradually changes from time t0 to time t7. For example, determiner 120 determines the threshold based on the device information. The device information may include, for example, information indicating the amount of heat generation of sound signal processing device 100. If sound signal processing device 100 is continuously used or is subjected to a high load in processing, the amount of heat generation of sound signal processing device 100 increases. Moreover, if sound signal processing device 100 is continuously used, the remaining level of the battery connected to sound signal processing device 100 for driving sound signal processing device 100 decreases. For example, determiner 120 changes the threshold to be higher as the amount of heat generation increases or as the remaining level of the battery decreases. In other words, determiner 120 changes the threshold so that the number of sound processes not executed among the plurality of sound processes will increase as the amount of heat generation increases or as the remaining level of the battery decreases.

In the example illustrated in FIG. 5, for sound signals (A) to (D) obtained by obtainer 110 at time t0, sound process (3) is not executed on sound signals (A) to (C) and is executed on sound signal (D), and the other sound processes are executed on sound signals (A) to (D), as in the example illustrated in FIG. 4.

For example, for sound signals (A) to (D) obtained by obtainer 110 at time t1, sound process (3) is not executed on each of sound signals (A) and (C), as in the example illustrated in FIG. 4. Further, in the example illustrated in FIG. 5, sound process (3) is not executed on sound signal (B) based on the priority information, unlike the example illustrated in FIG. 4.

For example, the threshold set initially may be any threshold. The threshold may be predetermined, or may be determined based on the performance of sound signal processing device 100 (for example, the performance of the processor included in sound signal processing device 100). Sound signal processing device 100 sets the threshold to be lower when the performance of sound signal processing device 100 is higher, for example.

Moreover, the priority information (i.e. the priority indicated by the priority information) may be changed.

FIG. 6 is a flowchart illustrating a priority update process by sound signal processing device 100 according to the embodiment.

First, obtainer 110 obtains priority information (S210).

Obtainer 110 also obtains space information (S220). Steps S210 and S220 are executed by, for example, obtaining a bitstream and position information. Steps S210 and S220 may be executed in any order.

Next, determiner 120 calculates the positional relationship between the user and the audio object based on the space information (S230). For example, determiner 120 calculates the position of the user in the sound space corresponding to the position of the user in the real space, and calculates the relative positional relationship between the user and the audio object in the sound space (S230).

Next, based on the foregoing information, determiner 120 updates the priority information stored in storage 140 (S240).

If storage 140 does not store priority information, determiner 120 may determine the priority based on the foregoing information. Priority information indicating the determined priority may be stored in storage 140.

Referring back to FIG. 2, sound processor 130 executes each sound process determined to be executed as described above on the sound signal, and further binauralizes the sound signal (S160). Specifically, sound processor 130 processes the sound signal so as to be a sound signal capable of reproducing sound reaching the user from the position of the audio object located at the predetermined position in the sound space by applying the HRIR DB so that the sound will reach the user from the position of the audio object, based on the coordinates and orientation of the user (i.e. the position and orientation of the listening point) in the sound space.

Sound processor 130 then outputs the processed sound signal to driver 230 (S170). Thus, sound processor 130 causes driver 230 to generate sound waves based on the waveform signal indicated in the sound signal and present the sound to the user.

Sound signal processing device 100 described above performs the following processing.

FIG. 7 is a flowchart illustrating processing by sound signal processing device 100 according to the embodiment.

First, obtainer 110 obtains a sound signal (S10).

Next, determiner 120 determines, for each of a plurality of sound processes executed in a pipeline, whether to execute the sound process on the sound signal, based on priority information indicating a priority associated with the sound signal (S20).

Next, sound processor 130 executes each sound process determined to be executed by determiner 120, on the sound signal (S30).

The sound signal on which each sound process determined to be executed by determiner 120 has been executed is output to, for example, driver 230.

When determiner 120 determines not to execute each of the plurality of sound processes in Step S20, sound processor 130 may output the sound signal to driver 230 without executing any sound processing. In this case, for example, sound processor 130 executes Steps S160 and S170 without executing Steps S110 to S150 in FIG. 2.

### [Effects, etc.]

The following will give examples of technologies obtained from the disclosure of this specification and describe the effects, etc. achieved by such technologies.

Technology 1 is a sound signal processing method executed by sound signal processing device 100, including: obtaining a sound signal (S10); determining, for each of a plurality of sound processes executed in a pipeline, whether to execute the sound process on the sound signal, based on priority information indicating a priority associated with the sound signal (S20); and executing each sound process determined to be executed in the determining, on the sound signal (S30).

The plurality of sound processes are, for example, early reflection processing (S110), obstruction processing (S120), portal processing (S130), occlusion processing (S140), and reverberation processing (S150).

Thus, one or more of the plurality of sound processes executed in a pipeline are executed on the sound signal or none of the plurality of sound processes is executed on the sound signal, based on the priority information. Therefore, for example, by setting the priority indicated by the priority information based on the user's preferences, the intention of the creator of the music based on the sound signal, or the state of the device that generates the sound based on the sound signal, appropriate sound processing is accordingly executed on the sound signal. Thus, with the sound signal processing method according to an aspect of the present disclosure, a plurality of sound processes executed in a pipeline can be executed appropriately on the sound signal. For example, with the sound signal processing method according to an aspect of the present disclosure, the amount of processing related to sound processing can be reduced because unnecessary sound processing can be omitted.

Technology 2 is the sound signal processing method according to technology 1, wherein the priority information indicates a priority of each of the plurality of sound processes, and in the determining, for each of the plurality of sound processes, whether to execute the sound process on the sound signal is determined based on whether the priority of the sound process is greater than or equal to a threshold.

For example, the priority and the threshold are each expressed by a numerical value.

Thus, by comparing the priority with the threshold, it is possible to easily determine, for each of the plurality of sound processes, whether to execute the sound process on the sound signal.

Technology 3 is the sound signal processing method according to technology 2, wherein the determining includes determining the threshold based on device information about a state of sound signal processing device 100.

Thus, the threshold is determined according to the state of sound signal processing device 100. It is therefore possible to easily determine, for each of the plurality of sound processes, whether to execute the sound process on the sound signal according to the state of sound signal processing device 100.

Technology 4 is the sound signal processing method according to technology 3, wherein the device information includes at least one of information indicating a remaining level of a battery for driving sound signal processing device 100, information indicating an amount of heat generation of sound signal processing device 100, or information indicating a processing capacity of sound signal processing device 100.

It is therefore possible to easily determine, for each of the plurality of sound processes, whether to execute the sound process on the sound signal according to the state of sound signal processing device 100 particularly relevant to sound processing, namely, at least one of the remaining level of the battery for driving sound signal processing device 100, the amount of heat generation of sound signal processing device 100, or the processing capacity of sound signal processing device 100.

Technology 5 is the sound signal processing method according to any one of technology 1 to technology 4, wherein the determining includes determining the priority indicated by the priority information based on position information indicating a position of a user of sound signal processing device 100.

Which of the plurality of sound processes is important in order to provide the user with better sound varies depending on the positional relationship between the user and the audio object. Hence, by changing the priority based on the position of the user, the sound process that is particularly important can be executed appropriately.

Technology 6 is a program for causing a computer to execute the sound signal processing method according to any one of technology 1 to technology 5.

This achieves the same effects as the sound signal processing method according to an aspect of the present disclosure.

Technology 7 is sound signal processing device 100 including: obtainer 110 that obtains a sound signal; determiner 120 that determines, for each of a plurality of sound processes executed in a pipeline, whether to execute the sound process on the sound signal, based on priority information indicating a priority associated with the sound signal; and sound processor 130 that executes each sound process determined to be executed by determiner 120, on the sound signal.

This achieves the same effects as the sound signal processing method according to an aspect of the present disclosure.

Technology 8 is sound signal reproduction system 200 including: sound signal processing device 100 according to technology 7; and driver 230 that generates a sound based on the sound signal on which each sound process determined to be executed by determiner 120 has been executed.

This provides a user with sound based on the sound signal on which sound processing has been appropriately executed by sound signal processing device 100.

### (Other embodiments)

While the embodiment has been described above, the present disclosure is not limited to the foregoing embodiment.

For example, sound signal reproduction system 200 described in the foregoing embodiment may be implemented as a single device including all of the components, or implemented by allocating the functions to a plurality of devices and coordinating these devices. In the latter case, for example, an information processing device such as a smartphone, a tablet terminal, or a personal computer may be used as a device corresponding to a processing module in sound signal processing device 100.

For example, sound signal processing device 100 may be implemented as a sound signal processing device that is connected to a reproduction device including only driver 230 and that only executes sound processing on the obtained sound signal and outputs it to the reproduction device. In this case, sound signal processing device 100 may be implemented as hardware including a dedicated circuit or as software for causing a general-purpose processor to execute specific processing.

In the foregoing embodiment, a process executed by a specific processing unit may be executed by another processing unit. The order of a plurality of processes may be changed, and a plurality of processes may be executed in parallel.

Each of the structural elements in the foregoing embodiment may be implemented by executing a software program suitable for the structural element. Each of the structural elements may be implemented by means of a program executing unit, such as a CPU or a processor, reading and executing the software program recorded on a recording medium such as a hard disk or semiconductor memory.

Each of the structural elements may be implemented by hardware. For example, the structural elements may be circuits (or integrated circuits). These circuits may constitute one circuit as a whole, or may be separate circuits. These circuits may each be a general-purpose circuit or a dedicated circuit.

The general or specific aspects of the present disclosure may be implemented using a device, a system, a method, an integrated circuit, a computer program, or a computer-readable non-transitory recording medium such as CD-ROM, or any combination of devices, systems, methods, integrated circuits, computer programs, and recording media.

For example, the present disclosure may be implemented as sound signal processing method executed by a computer, or implemented as a program for causing the computer to execute the sound signal processing method. The present disclosure may be implemented as a computer-readable non-transitory recording medium having the program recorded thereon.

Other modifications obtained by applying various changes conceivable by a person skilled in the art to each embodiment and any combinations of the structural elements and functions in each embodiment without departing from the scope of the present disclosure are also included in the present disclosure.

### [Industrial Applicability]

The presently disclosed technology is useful for audio equipment.

### [Reference Signs List]

- 100: sound signal processing device
- 110: obtainer
- 120: determiner
- 130: sound processor
- 140: storage
- 200: sound signal reproduction system
- 210: communication module
- 220: sensor
- 230: driver

## Claims

1. A sound signal processing method executed by a sound signal processing device, the sound signal processing method comprising:
obtaining a sound signal;
determining, for each of a plurality of sound processes executed in a pipeline, whether to execute the sound process on the sound signal, based on priority information indicating a priority associated with the sound signal; and
executing each sound process determined to be executed in the determining, on the sound signal.

2. The sound signal processing method according to claim 1,
wherein the priority information indicates a priority of each of the plurality of sound processes, and
in the determining, for each of the plurality of sound processes, whether to execute the sound process on the sound signal is determined based on whether the priority of the sound process is greater than or equal to a threshold.

3. The sound signal processing method according to claim 2,
wherein the determining includes determining the threshold based on device information about a state of the sound signal processing device.

4. The sound signal processing method according to claim 3,
wherein the device information includes at least one of information indicating a remaining level of a battery for driving the sound signal processing device, information indicating an amount of heat generation of the sound signal processing device, or information indicating a processing capacity of the sound signal processing device.

5. The sound signal processing method according to claim 1,
wherein the determining includes determining the priority indicated by the priority information based on position information indicating a position of a user of the sound signal processing device.

6. A program for causing a computer to execute the sound signal processing method according to any one of claim 1 to claim 5.

7. A sound signal processing device comprising:
an obtainer that obtains a sound signal;
a determiner that determines, for each of a plurality of sound processes executed in a pipeline, whether to execute the sound process on the sound signal, based on priority information indicating a priority associated with the sound signal; and
a sound processor that executes each sound process determined to be executed by the determiner, on the sound signal.

8. A sound signal reproduction system comprising:
the sound signal processing device according to claim 7; and
a driver that generates a sound based on the sound signal on which each sound process determined to be executed by the determiner has been executed.
